# EUROPÄISCHE PATENTANMELDUNG

(11) **EP 0 808 562 A1**
(43) Veröffentlichungstag der Anmeldung: **26.11.1997**
(21) Anmeldenummer: 97810291.1
(22) Anmeldetag: 09.05.1997
(51) Int. Cl.: A01J 17/00, A23D 7/05

(54) **Vorrichtung und Verfahren zur Bearbeitung einer fetthaltigen Massa mit einem bestimmten Wasseranteil, wie Butter oder Margarine**

(30) Priorität: 23.05.1996 CH 1301/96
(71) Anmelder: EGLI AG MASCHINEN- UND APPARATEBAU, 9606 Bütschwil (CH)
(72) Erfinder: Egli, Rudenz, 9606 Bütschwil (CH)
(74) Vertreter: Hepp, Dieter

(57) **Zusammenfassung**

Es wird eine Vorrichtung zur Bearbeitung einer fetthaltigen Masse mit einem bestimmten Wasseranteil, wie Butter oder Margarine, beschrieben. Um unter anderem eine bessere Streichfähigkeit der Butter zu erhalten sind die mechanischen Bearbeitungsmittel (8; 15) der Kneteinrichtung (9) und/oder der Kühleinrichtung (5) kühlbar ausgebildet sind. Dazu sind diese teilweise hohlwandig ausgebildet und bilden Teil eines Kühlkreislaufes.

## Beschreibung

Die Erfindung betrifft eine Vorrichtung und ein Verfahren zur Bearbeitung einer fetthaltigen Masse mit einem bestimmten Wasseranteil, wie Butter oder Margarine nach dem Oberbegriff der unabhängigen Patentansprüche.

Bei den bekannten industriellen Anlagen zur Herstellung von Butter werden konventionelle rotierende Trommeln eingesetzt, in die Rahm eingeführt oder eingespritzt wird. Beim Auftreffen von Rahmtropfen auf die mit hoher Geschwindigkeit rotierende Wand, treten aufgrund der Beschleunigung hohe Scherkräfte auf. Damit wird in der beabsichtigten Weise der Rahm in Fett- und Wasserbestandteile getrennt. Die Rotationsgeschwindigkeit derartiger Trommeln beträgt etwa 600 bis 1200 Umdrehungen pro Minute. Der Durchmesser einer solchen Trommel liegt bei etwa 60 cm. Durch die grosse Scherkraft wird in konventionellen Anlagen sehr schnittfeste Butter erzeugt, wobei der Restfettgehalt in der Buttermilch relativ hoch ist.

Die auf diese Weise erhaltene Butter wird aus verschiedenen Gründen weiterbearbeitet. Falls die Butter nicht zum sofortigen Verbrauch bestimmt ist, muss sie tiefgekühlt werden. Das industrielle Fördern von tiefgekühlter Butter mittels Pumpen ist aber aufgrund der Festigkeit von tiefgefrorener Butter nicht möglich. Ein weiterer Nachteil von mit bekannten Verfahren hergestellter Butter liegt in deren relativ schlechter Streichfähigkeit. Der Verbraucher wünscht sich eine Butter, die sich auch bei verhältnismässig tiefen Temperaturen leicht streichen lässt.

Der Erfindung liegt daher die Aufgabe zugrunde, die Nachteile des Bekannten zu vermeiden, insbesondere eine Vorrichtung und ein Verfahren zur Bearbeitung einer fetthaltigen Masse mit einem bestimmten Wasseranteil, wie Butter oder Margarine zu schaffen, mit welchen die fetthaltige Masse sich rationell fördern und kühlen und/oder mit welchen sich die Streichfähigkeit der fetthaltigen Masse erhöhen lässt.

Erfindungsgemäss wird diese Aufgabe dadurch gelöst, dass die Bearbeitungsmittel für die mechanische Bearbeitung der fetthaltigen Masse wie Butter oder Margarine unter gleichzeitiger Kühlung ausgebildet sind. Dadurch wird die Masse während der Bearbeitung oder während der Weiterförderung in unmittelbarem und flächigem Kontakt von den Bearbeitungsmitteln gekühlt, was zu einer hervorragenden Kühlung der Butter oder Margarine auf eine vorbestimmte Kühltemperatur erfolgt. Dies hat den weiteren Vorteil, dass die Wassereinschlüsse beispielsweise durch die Knetelemente in ihrer Grösse verkleinert werden können, was eine bessere Streichfähigkeit der Butter oder der Margarine ergibt.

Vorteilhaft sind die Bearbeitungsmittel mindestens teilweise hohlwandig ausgebildet und Teil eines Kühlkreislaufes. Dabei kann das Bearbeitungsmittel von einem einzigen Kanal oder von mehreren, zueinander parallel angeordneten Kanälen durchsetzt sein. Als Transportmittel für die fetthaltige Masse können Schneckenflügel einer Förderschnecke vorgesehen sein, die ebenfalls teilweise hohlwandig ausgebildet und daher kühlbar sind. Durch die ausreichende Verweilzeit oder Förderzeit der fetthaltigen Masse in dem mit den kühlbaren Arbeitsmitteln versehenen Behältnis wie eine Kneteinrichtung oder eine Kühleinrichtung mit Förderschnecken wird diese genügend auf die vorgegebene Kühltemperatur abgekühlt. Die Kühltemperatur liegt vorzugsweise im Bereich von +6°C bis -2°C. Um eine Verbesserung der Streichfähigkeit der Butter oder der Margarine zu erreichen, sind die Wassereinschlüsse auf eine Grösse von 4, vorzugsweise auf etwa 3 Mikrometer, zu verringern.

Bei dem erfindungsgemässen Verfahren wird eine fetthaltige Masse mit einem Wasseranteil, wie Butter oder Margarine mit Bearbeitungsmitteln bearbeitet. Erfindungswesentlich ist, dass die fetthaltige Masse zusätzlich zum Bearbeiten durch die Bearbeitungsmittel gekühlt wird.

Eine besonders vorteilhafte Anwendungsform des erfindungsgemässen Verfahrens ergibt sich, wenn das Verfahren zum Fördern der fetthaltigen Masse mittels gekühlten Fördermitteln angewandt wird. Die fetthaltige Masse wird dabei von einer Anfangstemperatur am Anfang einer Fördereinrichtung, beispielsweise einer kühlbaren Förderschnecke, auf eine vorgegebene Endtemperatur am Ende der Fördereinrichtung gekühlt. Die Endtemperatur liegt vorzugsweise im Bereich von -2°C bis +6°C.

Eine besonders günstige Ausführungsform des erfindungsgemässen Verfahrens ergibt sich, wenn die fetthaltige Masse am Ende der Fördereinrichtung, beispielsweise der Förderschnecke extrudiert und in Blöcke geschnitten wird. Auf diese Weise können direkt tiefgekühlte Blöcke der fetthaltigen Masse hergestellt werden, was mit herkömmlichen Förderelementen wie Pumpen nicht möglich wäre.

Eine andere vorteilhafte Anwendungsform des erfindungsgemässen Verfahrens ergibt sich, wenn das Bearbeiten der fetthaltigen Masse ein Kneten oder Walken mit einem kühlbaren Knetelement ist. Beim Kneten der fetthaltigen Masse wird die Masse aufgrund der wirkenden mechanischen Wechselwirkungen erwärmt. Dank der kühlbaren Knetelemente, beispielsweise hohle, von einem Kühlmedium durchflossene Elemente kann die Temperatur der fetthaltigen Masse während des Knetvorgangs dauernd in einem vorgegebenen Bereich gehalten werden. Besonders günstig ist die Anwendung dieses gekühlten Knetverfahrens in einem Verfahren zur Verbesserung der Streichfähigkeit einer fetthaltigen Masse mit einem Wassereinschluss, wie beispielsweise Butter oder Margarine. Die fetthaltige Masse wird bei einer Temperatur im Bereich von -2°C bis +6°C so lange geknetet, bis die Wassereinschlüsse im Fett eine durchschnittliche Grösse von höchstens 4 Mikrometer, vorzugsweise 3 Mikrometer erreichen. Damit sich die Butter im laufe des Knetvorgangs nicht erwärmt, sind die Knetelemente kühlbar ausgebildet.

Eine Vorrichtung zum Verbessern der Streichfähigkeit einer fetthaltigen Masse mit Wassereinschlüssen, wie Butter oder Margarine besteht aus einer Komponente zum gekühlten Fördern der fetthaltigen Masse und einer nachgeschalteten Komponente zum gekühlten Kneten der fetthaltigen Masse.

Weitere Vorteile der Erfindung ergeben sich aus den abhängigen Patentansprüchen und der nachfolgenden Beschreibung, in welcher die Erfindung anhand in den schematischen Zeichnungen dargestellten Ausführungsbeispielen näher erläutert wird. Es zeigt:
- Fig. 1: eine schematische Anordnung mit einer Kneteinrichtung und mit einer Förderanlage für Butter,
- Fig. 2: eine Obenansicht auf zwei Knetelemente der Kneteinrichtung,
- Fig. 3: eine Seitenansicht auf die Knetelemente der Figur 2 in Richtung des Pfeiles A,
- Fig. 4: eine Kühleinrichtung für Butter,
- Fig. 5: eine Obenansicht der Kühleinrichtung der Figur 4 in Richtung des Pfeiles B, und
- Fig. 6: eine Teilansicht eines Schneckenflügels in Querschnitt.

In den Figuren sind jeweils für dieselben Elemente die gleichen Bezugszeichen verwendet worden, und es gelten erstmalige Erklärungen für alle Figuren, wenn nicht ausdrücklich anders erwähnt.

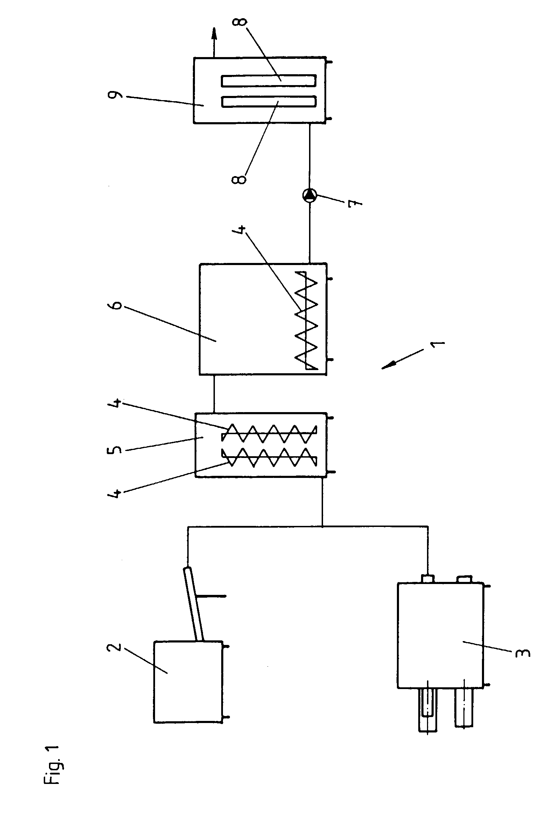

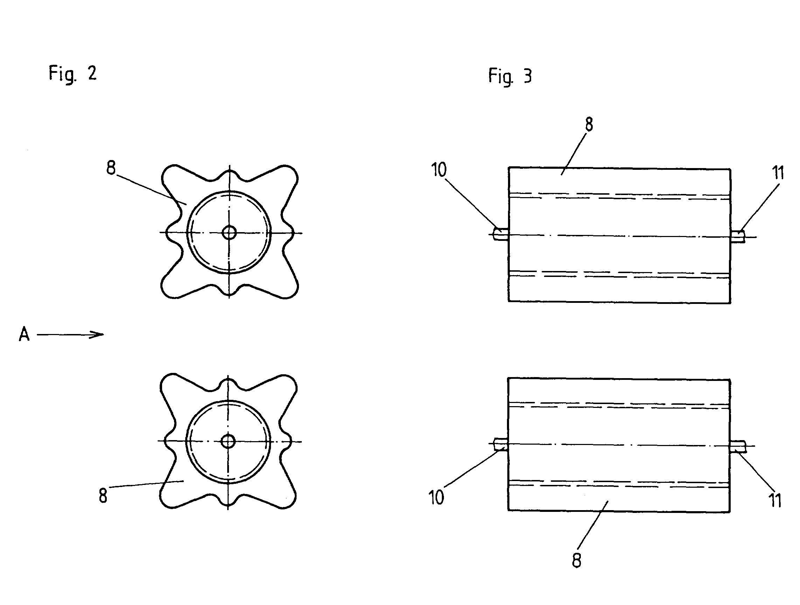

In Figur 1 ist schematisch eine Anordnung 1 zur Herstellung von streichfähiger Butter oder Margarine dargestellt. Sie weist eine Butterungsmaschine 2 und einen parallel dazu geschalteten Schaberwärmetauscher 3 auf, die zusammen mit einer wendelförmige Förderelemente 4 aufweisenden Kühleinrichtung 5 verbunden sind. Die wendelförmigen Förderelemente 4 können als Förderschnecken ausgebildet sein, wie mit Bezug auf den Figuren 3 und 4 beschrieben. Der Kühleinrichtung 5 ist ein gekühlter und mit einem im wesentlichen horizontalen wendelförmigen Förderelement 4 versehenen Lagerraum 6 nachgeschaltet, der über ein Fördermittel 7 an einer Knetelemente 8 aufweisenden Kneteinrichtung 9 angeschlossen ist. Die Kühleinrichtung 5 und die Kneteinrichtung 9 sind dabei kühlbar ausgebildet, wie nachfolgend in näheren Einzelheiten beschrieben ist. Das Fördermittel 7 kann eine Pumpe sein.

In Figur 2 sind zwei Knetelemente 8 der Kneteinrichtung 9 in Obenansicht und in Figur 3 in Seitenansicht in Richtung des Pfeiles A der Figur 2 dargestellt. Wie ersichtlich sind die Knetelemente 8 hohlzylindrisch ausgebildet und weisen oben und unten ein Anschlussrohr 10 und 11 auf, die an einem nicht weiter gezeigten Kühlkreislauf angeschlossen sind. Die Anschlussrohre 10 und 11 sind dabei in einem mit Dichtungen versehenen Verbindungrohr drehbar gelagert. Die Knetelemente 8 werden beispielsweise mit einem Elektromotor in der üblichen Weise angetrieben.

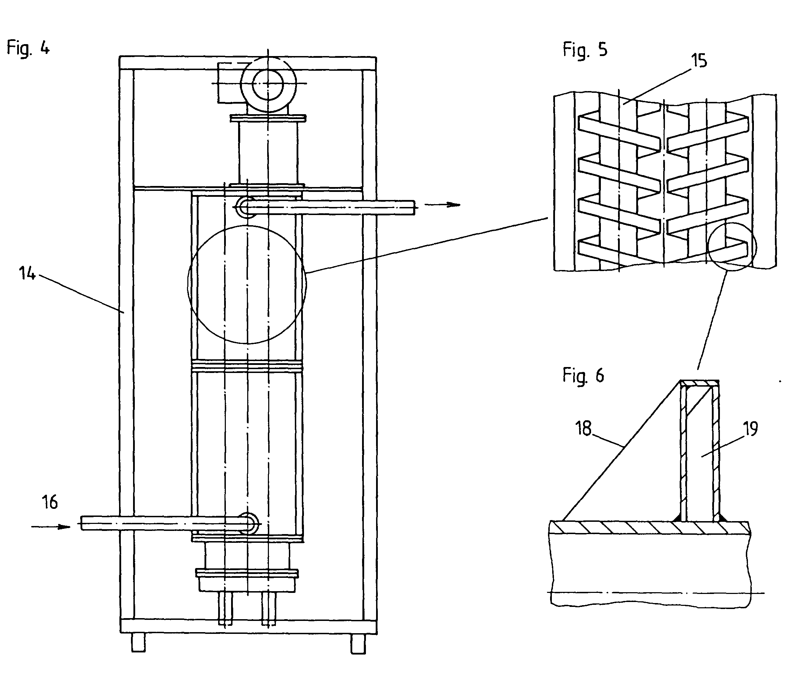

In Figur 4 ist eine Förderanlage 14 mit Förderschnecken 15 für die fetthaltige Masse wie Butter oder Margarine und in Figur 5 eine Schnittzeichnung der Figur 4 dargestellt. Die Butter wird von unten über eine Zuleitung 16 in die Kühleinrichtung geführt. Die Förderschnecken 15 weisen mehrere wendelförmige Schneckenflügel 18 auf (siehe Figur 6), die je von einem Hohlraum 19 getragen sind. Die Hohlräume 19 sind hier ebenfalls mit einem nicht näher dargestellten Kühlkreislauf verbunden. Da die Butter in einem innigen Kontakt mit den wendelförmigen Schneckenflügel 18 steht, wird sie während der Förderzeit längs der Förderschnecke 15 ausreichend abgekühlt. Vorzugsweise beträgt die Kühltemperatur zwischen +6°C und -2°C.

Es hat sich nun bei der Herstellung von Butter oder Margarine herausgestellt, dass die Streichfähigkeit auch von der Grösse und Art der Wassereinschlüsse abhängt. Durch Kneten oder Walken mit den Knetelementen 8 kann die Grösse und Art der Wassereinschlüsse verringert werden, vorausgesetzt, dass die Temperatur der fetthaltigen Masse einen gewissen Wert nicht übersteigt. Dies wird durch die gleichzeitige Kühlung der Knetelemente 8 erreicht, wodurch die beim Kneten oder Walken entstehende Wärme abgeführt und gleichzeitig die Butter auf einer vorbestimmten Kühltemperatur gehalten wird. Die Verweilzeit im Behältnis soll dabei ausreichend sein, um zunächst eine ausreichende Abkühlung der fetthaltigen Masse zu gewährleisten. Eine verbesserte Streichfähigkeit der Butter oder Margarine wird insbesondere erhalten, wenn die Grösse der Wassereinschlüsse höchstens 4 Mikrometer, vorzugsweise etwa 3 Mikrometer, beträgt.

Es versteht sich nun für den Fachmann, dass eine Kühlung der Butter während des Herstellungsverfahrens nicht unbedingt bei jeder Prozessstufe erforderlich ist, sondern auch eine partielle Kühlung schon ausreichend sein kann. Beispielsweise kann es unter Umständen genügend sein, wenn die Butter vor dem Kneten und Walken in der Kneteinrichtung 9 auf eine tiefe Temperatur von beispielsweise -2° C abgekühlt wird und die bei entstehende Knetwärme die Butter oder Margarine höchstens bis auf eine Temperatur von +4° C erwärmt, so dass die Grösse der Wassereinschlüsse immer noch wirksam verringert werden kann.

## Patentansprüche

1. Verfahren zur Bearbeitung einer fetthaltigen Masse mit einem bestimmten Wasseranteil, wie Butter oder Margarine, mittels mechanischen Bearbeitungsmitteln (8; 15), dadurch gekennzeichnet, dass die fetthaltige Masse durch die mechanischen Bearbeitungsmittel (8; 15) gleichzeitig gekühlt wird.

2. Verfahren nach Anspruch 1, dadurch gekennzeichnet, dass die Bearbeitung ein Fördern mit einer kühlbaren Förderschnecke (15) ist, wobei die fetthaltige Masse von einer Anfangstemperatur am Anfang der Förderschnecke auf eine vorgegebene Endtemperatur am Ende der Förderschnecke (15) gekühlt wird.

3. Verfahren nach Anspruch 2, dadurch gekennzeichnet, dass die Endtemperatur am Ende der Förderschnecke (15) im Bereich von -2°C bis +6°C liegt.

4. Verfahren nach einem der Ansprüche 2 bis 3, dadurch gekennzeichnet, dass die fetthaltige Masse am Ende der Förderschnecke (15) extrudiert und in Blöcke geschnitten wird.

5. Verfahren nach Anspruch 1, dadurch gekennzeichnet, dass die Bearbeitung ein Kneten oder Walken mittels einem kühlbaren Knetelement (8) ist.

6. Verfahren nach Anspruch 5, dadurch gekennzeichnet, dass die fetthaltige Masse bei einer Temperatur im Bereich von -2°C bis +6°C so lange geknetet wird, bis der Wasseranteil der fetthaltigen Masse aus Wassereinschlüssen besteht, die eine durchschnittliche Grösse von höchstens 4 Mikrometer, vorzugsweise 3 Mikrometer aufweisen.

7. Verfahren zur Verbesserung der Streichfähigkeit einer fetthaltigen Masse mit einem Wasseranteil, wie Butter oder Margarine, insbesondere unter Verwendung einer Vorrichtung nach einem der Ansprüche 1 bis 4, gekennzeichnet durch folgende Schritte:
- Kühlen der fetthaltigen Masse auf eine Temperatur im Bereich von -2°C bis +6°C
- Kneten der fetthaltigen Masse bei einer Temperatur im Bereich von -2°C bis +6°C bis der Wasseranteil in der fetthaltigen Masse aus Wassereinschlüssen besteht, die eine durchschnittliche Grösse von höchstens 4 Mikrometer, vorzugsweise 3 Mikrometer aufweisen.

8. Vorrichtung zur Bearbeitung einer fetthaltigen Masse mit einem bestimmten Wasseranteil, wie Butter oder Margarine, mit einem mechanischen Bearbeitungsmittel (8; 15) aufweisenden Behältnis, dadurch gekennzeichnet, dass die Bearbeitungsmittel zum gleichzeitigen Kühlen und Bearbeiten der fetthaltigen Masse ausgebildet sind.

9. Vorrichtung nach Anspruch 8, dadurch gekennzeichnet, dass die Bearbeitungsmittel (8; 15) mindestens teilweise hohlwandig ausgebildet sind und Teil eines Kühlkreislaufes bilden.

10. Vorrichtung nach Anspruch 9, dadurch gekennzeichnet, dass die Bearbeitungsmittel als doppelwandige Schneckenflügel (19) einer Förderschnecke (15) ausgebildet sind.

11. Vorrichtung nach Anspruch 10, dadurch gekennzeichnet, dass die Bearbeitungsmittel Knetelemente (8) einer Kneteinrichtung (9) sind.

12. Anordnung zur Erhöhung der Streichfähigkeit einer fetthaltigen Masse mit einem bestimmten Wasseranteil, wie Butter oder Margarine, gekennzeichnet durch eine Vorrichtung zum gekühlten Fördern der fetthaltigen Masse und einer nachgeschalteten Vorrichtung zum gekühlten Kneten der fetthaltigen Masse,
wobei die Vorrichtung zum Fördern ein kühlbares Förderelement, vorzugsweise eine kühlbare Förderschnecke aufweist und
wobei die Vorrichtung zum Kneten ein kühlbares Knetelement aufweist.

13. Verwendung von kühlbaren mechanischen Bearbeitungsmitteln (8; 15) zur Bearbeitung einer fetthaltigen Masse mit einem bestimmten Wasseranteil, wie Butter oder Margarine unter gleichzeitiger Kühlung durch die Bearbeitungsmittel.
